# NEUE EUROPÄISCHE PATENTSCHRIFT

(11) **EP 2 406 521 B2**
(45) Veröffentlichungstag und Bekanntmachung des Hinweises auf die Entscheidung über den Einspruch: **09.01.2019**
(45) Hinweis auf die Patenterteilung: 25.02.2015
(21) Anmeldenummer: 10711330.0
(22) Anmeldetag: 09.03.2010
(51) Int. Cl.: B60K 6/40, B60K 6/48, F16F 15/14

(54) **ANTRIEBSSTRANG FÜR HYBRIDANTRIEBE MIT TORSIONSDÄMPFER UND FLIEHKRAFTPENDEL**
DRIVE TRAIN FOR HYBRID DRIVES AND TORSION DAMPER
CHAÎNE CINÉMATIQUE POUR PROPULSIONS HYBRIDES, ET AMORTISSEUR DE TORSION

(30) Priorität: 12.03.2009 DE 102009012485
(43) Veröffentlichungstag der Anmeldung: 18.01.2012
(73) Patentinhaber: Daimler AG, 70327 Stuttgart (DE)
(72) Erfinder: MOSER, Franz, 73269 Hochdorf (DE)
(74) Vertreter: JENSEN & SON
(86) Internationale Anmeldenummer: PCT/EP2010/001463
(87) Internationale Veröffentlichungsnummer: WO 2010/102789

(56) Entgegenhaltungen:
- EP-A2- 1 712 394
- DE-A1- 10 025 853
- DE-A1-102006 028 552
- DE-A1-102006 028 556
- GB-A- 2 346 351
- KR-A- 20080 035 042
- FIDLIN, A.: 'Simulationstechnik am Beispiel des ZMS - Die Stecknadel im Heuhaufen finden' LUK-KOLLOQUIUM 01 Januar 2006, Seiten 56 - 71, XP055261827

## Beschreibung

Die Erfindung betrifft einen Hybridantriebsstrang.

Zur Reduzierung von Torsionsschwingungen im Antriebsstrang eines Hybridantriebs werden in der Praxis ein oder mehrere Torsionsdämpfer (TD) eingesetzt. Eine typische Anordnung besteht aus einem TD zwischen der Motordrehmasse und der E-Maschine und einem weiteren TD zwischen E-Maschine und Getriebeeingangswelle. Dadurch entsteht ein 3-Massenschwingungssystem, bei dem die Resonanz der E-Maschine in den Frequenzbereich fällt, der vor allem von 4-Zylindermotoren durch die Hauptordnung (2. Ordnung) angeregt wird. Dies führt im niedertourigen Fahrbereich zu störenden Brummüberhöhungen.

Darüber hinaus sind aus der DE 35 45 857 C1 und der DE 36 09 149 C2 Zwei-Massen-Schwungräder mit Feder- und Dämpfungssystemen bekannt, bei denen in Wirkrichtung eine Federung mit einem oder mehreren Dämpfern, die als Rutschkupplungen ausgebildet sind, zur Verbindung eines ersten Schwungradelementes und eines zweiten Schwungradelementes derart in Reihe geschaltet sind.

Die DE 10 2006 028 552 A1 offenbart eine Kupplungseinrichtung mit einer Kupplungsscheibe, die eine Kupplungsnabe umfasst. Dabei ist es vorgesehen, dass eine Pendelmassenträgereinrichtung einer Fliehkraftpendeleinrichtung, die mehrere Pendelmassen umfasst, die an der Pendelmassenträgereinrichtung relativ zu dieser bewegbar angeordnet sind, mit der Kupplungsscheibe gekoppelt ist.

Aus der DE 10 2006 028 556 A1 ist eine Drehmomentübertragungseinrichtung im Antriebsstrang eines Kraftfahrzeugs zur Drehmomentübertragung zwischen einer Antriebseinheit, insbesondere einer Brennkraftmaschine, bekannt, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung. Dabei ist es vorgesehen, dass die Laufrollen jeweils mindestens einen Bund aufweisen, der unter Fliehkrafteinwirkung auf die Pendelmasse in axialer Richtung zwischen der Pendelmasse und der Pendelmassenträgereinrichtung angeordnet ist.

Der EP 1 712 394 A2 ist ein Hybridantriebsstrang als bekannt zu entnehmen. Der Hybridantriebsstrang umfasst eine Brennkraftmaschine, eine Kupplung, eine E-Maschine und ein Getriebe.

Darüber hinaus offenbart die GB 2 346 351 A einen Antriebsstrang mit einer Brennkraftmaschine, einer E-Maschine, einem Getriebe und einer Kupplung.

Es hat sich gezeigt, dass das Betriebsverhalten von mit bekannten Schwungrädern versehenen Antriebssträngen von Hybridantrieben unbefriedigend ist.

Der Erfindung liegt die Aufgabe zugrunde, Mittel zur Verfügung zu stellen, um bei Fahrzeugen mit Hybridantrieb Brummgeräusche im niedertourigen Fahrbereich zu reduzieren.

Die Lösung dieser Aufgabe erfolgt erfindungsgemäß mit den Merkmalen des Anspruchs 1.

Gemäß der Erfindung ist ein Hybridantriebsstrang vorgesehen, mit einer Brennkraftmaschine, einer E-Maschine, einer Kupplung und einem Getriebe, wobei zwischen der Brennkraftmaschine und der E-Maschine ein erstes Feder- und Dämpfungssystem angeordnet ist, und wobei das Feder- und Dämpfungssystem eine Fliehkraftpendeleinrichtung aufweist. Dadurch werden Brummgeräusche im niedertourigen Fahrbereich reduziert.

Ferner ist vorgesehen, dass die Kupplung getriebeseitig der Fliehkraftpendeleinrichtung angeordnet ist, wobei die Eingangsseite der Kupplung vorzugsweise verdrehfest mit einer Ausgangsseite der Fliehkraftpendeleinrichtung gekoppelt ist.

Außerdem ist die E-Maschine getriebeseitig der Kupplung angeordnet ist.

Zudem ist zwischen der E-Maschine und dem Getriebe ein zweites Feder- und Dämpfungssystem angeordnet.

Gemäß einer besonders bevorzugten Ausgestaltung der Erfindung ist vorgesehen, dass das erste Feder- und Dämpfungssystem nach Art eines Torsionsdämpfers, insbesondere eines Zwei-Massen-Schwungrades aufgebaut ist und auf einem ersten Radius Federn und auf einem zweiten Radius die Fliehkraftpendeleinrichtung aufweist, wobei der zweite Radius größer als der erste Radius ist. Bei dieser Ausgestaltung ist es das Ziel, im vorhandenen Bauraum eines Zwei-Massen-Schwungrades die Fliehkraftpendeleinrichtung so unterzubringen, dass sie einen großen Wirkradius hat und ein Gegenmoment zur Schwingung der E-Maschine aufbringt. Dadurch werden die Torsionsschwingungen, die durch die Resonanz der E-Maschine im niederen Frequenzbereich hervorgerufen werden, deutlich reduziert.

Gemäß einer weiteren bevorzugten Ausgestaltung der Erfindung ist vorgesehen, dass die Federn im Momentenfluss von der Brennkraftmaschine zu dem Getriebe brennkraftmaschinenseitig der Fliehkraftpendeleinrichtung angeordnet ist.

Gemäß einer weiteren bevorzugten Ausgestaltung der Erfindung ist vorgesehen, dass die Fliehkraftpendeleinrichtung an einer Rotationsmasse angeordnet ist.

Gemäß einer weiteren bevorzugten Ausgestaltung der Erfindung ist vorgesehen, dass die Kupplung als Nasskupplung ausgebildet ist.

Die Vorteile der Erfindung zeigen sich bereits an einem Torsionsdämpfer für einen Kraftfahrzeug-Hybridantrieb, mit einer Eingansseite und einer Ausgangsseite, zwischen denen ein erstes Feder- und Dämpfungssystem angeordnet ist, wenn - wie gemäß einem Aspekt der Erfindung vorgesehen - das Feder- und Dämpfungssystem eine Fliehkraftpendeleinrichtung aufweist. Dadurch werden Brummgeräusche im niedertourigen Fahrbereich reduziert. Dies gilt insbesondere bei einer besonders bevorzugten Ausgestaltung der Erfindung, gemäß welcher vorgesehen ist, dass das erste Feder- und Dämpfungssystem nach Art eines Zwei-Massen-Schwungrades aufgebaut ist und auf einem ersten Radius Federn und auf einem zweiten Radius die Fliehkraftpendeleinrichtung aufweist, wobei der zweite Radius größer als der erste Radius ist. Hinsichtlich der Vorteile und Wirkungsweisen des Torsionsdämpfers wir auf die entsprechende Beschreibung des Antriebsstrangs ausdrücklich Bezug genommen und verwiesen.

Weitere vorteilhafte Ausgestaltungen und Weiterbildungen der Erfindung ergeben sich aus den Unteransprüchen sowie aus der Beschreibung im Zusammenhang mit den Zeichnungen.

Dabei zeigen:
- Fig. 1: Ein Ersatzschaltbild einer besonders bevorzugten ersten Ausführungsform eines erfindungsgemäßen Antriebsstrangs mit einer besonders bevorzugten ersten Ausführungsform eines erfindungsgemäßen Torsionsdämpfers,
- Fig. 2: einen Schnitt durch einen Torsionsdämpfer für den Antriebsstrang in Fig. 1,
- Fig. 3: ein Ersatzschaltbild einer besonders bevorzugten zweiten Ausführungsform eines erfindungsgemäßen Antriebsstrangs mit einer besonders bevorzugten zweiten Ausführungsform eines erfindungsgemäßen Torsionsdämpfers, und
- Fig. 4: einen Schnitt durch einen Torsionsdämpfer für den Antriebsstrang in Fig. 3.

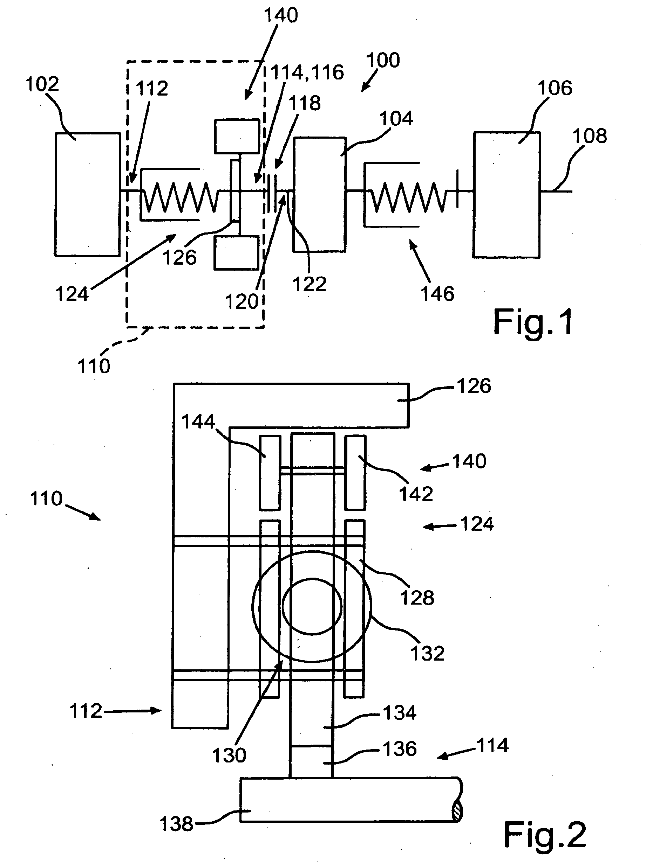

In dem in Fig. 1 gezeigten Ersatzschaltbild einer besonders bevorzugten ersten Ausführungsform eines erfindungsgemäßen Antriebsstrangs 100 sind eine Brennkraftmaschine 102 und eine E-Maschine 104 vorgesehen, um über ein Schaltgetriebe 106 eine Abtriebswelle 108 anzutreiben. Die Brennkraftmaschine 102 ist vorzugsweise sein 4-, 5- oder 6-zylinder Otto- oder Dieselmotor. Die E-Maschine 104 ist ein Aggregat welches sowohl einen Motor- als auch einen Generatorbetrieb erlaub. Das Schaltgetriebe 106 ist ein Getriebe mit fünf, sechs oder sieben Vorwärtsgängen. Ein Rückwärtsgang ist nicht zwingend vorzusehen, da eine Rückwärtsfahrt über die E-Maschine 104 darstellbar ist. Wenn der Antrieb über die Brennkraftmaschine 102 erfolgt, stellen diese sowie die E-Maschine 104 und das Schaltgetriebe 106 ein Drei-Massen-System dar.

Um Drehungleichförmigkeiten der Brennkraftmaschine 102 auszugleichen, ist ein Torsionsdämpfer 110 gemäß einer besonders bevorzugten ersten Ausführungsform der Erfindung vorgesehen, dessen Eingangsseite 112 mit einer Kurbelwelle (nicht gezeigt) der Brennkraftmaschine 102 verdrehfest verbunden ist und dessen Ausgangsseite 114 verdrehfest an eine Eingansseite 116 einer Kupplung 118 angeschlossen ist. Die Kupplung 118 ist als Nasskupplung ausgeführt. Eine Ausgangsseite 120 der Kupplung 118 ist verdrehfest mit einer Welle 122 der E-Maschine 104 verbunden.

Der Torsionsdämpfer 110, der in Fig. 2 in einem vereinfachten Schnitt gezeigt ist, ist als ein erstes Feder- und Dämpfungssystem 124 nach Art eines Zwei-Massen-Schwungrades aufgebaut, wobei eine erste Rotationsmasse 126 an der Ausgangsseite 114 angeordnet ist. An dieser ersten Rotationsmasse 126 stützt sich eine Käfigeinrichtung 128 mit mehreren Käfigen 130 ab, wobei diese Käfige 130 der Aufnahme von Druckfedern 132 dienen. An ihrer einen Seite stützen sich die Duckfedern 132 an dem jeweiligen Käfig 130 ab, und mit ihrer anderen Seite stützen sich die Duckfedern 132 über eine Zentralscheibe 134 und eine Nabe 136 an einer Welle 138 ab, wobei die Welle 138 als Teil der Kupplung 118 ausgebildet sein kann.

Der Torsionsdämpfer 110 weist ferner eine Fliehkraftpendeleinrichtung 140 auf, welche auch als Fliehkraftpendel bezeichnet werden kann. Diese Fliehkraftpendeleinrichtung 140 weist Pendelmassen 142, 144 auf, die in Kurvenbahnen im Fliehkraftfeld pendeln.

In Fig. 2 ist gezeigt, dass die Fliehkraftpendeleinrichtung 140 radial außerhalb der Käfigeinrichtung 128 mit den Druckfedern 132 in einer axial gleichen Lage angeordnet ist. Allerdings befinden sich sowohl die Fliehkraftpendeleinrichtung 140 als auch die Käfigeinrichtung 128 mit den Druckfedern 132 innerhalb der durch die erste Rotationsmasse 126 bestimmten Kontur.

Die Wirkungsweise des gezeigten Antriebsstrangs ist folgende:
Ein von der Brennkraftmaschine 102 erzeugtes Drehmoment mit überlagertem Wechselmoment wird zunächst durch die and er ersten Rotationsmasse 126 (Schwungrad) befestigte Käfigeinrichtung 128 (Federführungsbleche) auf die Druckfedern 132 des Torsionsdämpfers 110 übertragen und von den Federn 132 auf die mit der Welle 138 zur nassen Anfahrkupplung (NAK) befestigte Nabe 136 weitergeleitet. Diese Nabe 136 und die mit dieser verbundene Zentralscheibe 134 sind im Außendurchmesser so gestaltet, dass radial außerhalb des Federsatzes ausreichend Bauraum vorhanden ist, um die Fliehkraftpendeleinrichtung 140 (das Fliehkraftpendel) daran zu befestigen. Dadurch wird erreichet, dass das vom Motor erzeugte Wechselmoment durch den Federsatz bereits erheblich reduziert wird, und dass das Fliehkraftpendel einen maximalen Wirkradius besitzt und damit ein großes Gegenmoment zu dem nach dem Torsionsdämpfer noch vorhandenen Wechselmoment aufbringen kann. Da die Nabe 136 bei geschlossener Kupplung 118 (NAK) direkt mit der E-Maschine 104 verbunden ist, wirkt das Gegenmoment direkt auf die E-Maschine 104 und kann damit die durch die Resonanz der E-Maschine 104 hervorgerufenen Schwingungen deutlich reduzieren.

Es sei noch erwährt, dass zwischen der E-Maschine 104 und dem Getriebe 106 ein zweites Feder- und Dämpfungssystem 146 angeordnet ist.

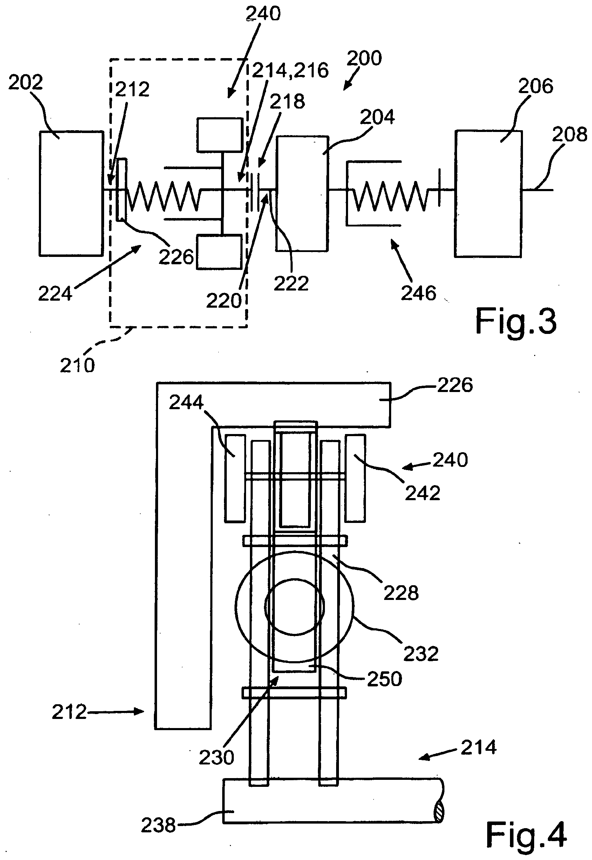

Der anhand der Fig. 3 gezeigte Antriebsstrang 200 gemäß einer besonders bevorzugten zweiten Ausführungsform der Erfindung sowie der darin vorgesehene, in Fig. 4 gezeigte Torsionsdämpfer 210 gemäß einer besonders bevorzugten zweiten Ausführungsform der Erfindung unterscheiden sich von der jeweils ersten Ausführungsform nur in Details. Daher sind zur Beschreibung Bezugszeichen verwendet, die gegenüber der jeweils ersten Ausführungsform um 100 erhöht sind. Auf die entsprechende Beschreibung wird hiermit ausdrücklich Bezug genommen und verwiesen.

Wie bei der ersten Ausführungsform sind auch in dem in Fig. 3 gezeigten Antriebsstrang 200 eine Brennkraftmaschine 202 und eine E-Maschine 204 vorgesehen, die dazu dienen, über ein Schaltgetriebe 206 eine Abtriebswelle 208 anzutreiben. Die Brennkraftmaschine 202 ist vorzugsweise ein 4-, 5- oder 6-Zylinder Otto- oder Dieselmotor. Die E-Maschine 204 ist ein Aggregat welches sowohl einen Motor- als auch einen Generatorbetrieb erlaub. Das Schaltgetriebe 206 ist ein Getriebe mit fünf, sechs oder sieben Vorwärtsgängen. Ein Rückwärtsgang ist nicht zwingend vorzusehen, da eine Rückwärtsfahrt über die E-Maschine 204 darstellbar ist. Wenn der Antrieb über die Brennkraftmaschine 202 erfolgt, stellen diese sowie die E-Maschine 204 und das Schaltgetriebe 206 ein Drei-Massen-System dar.

Um Drehungleichförmigkeiten der Brennkraftmaschine 202 auszugleichen, ist ein Torsionsdämpfer 210 gemäß einer besonders bevorzugten ersten Ausführungsform der Erfindung vorgesehen, dessen Eingangsseite 212 mit einer Kurbelwelle (nicht gezeigt) der Brennkraftmaschine 202 verdrehfest verbunden ist und dessen Ausgangsseite 214 verdrehfest an eine Eingansseite 216 einer Kupplung 218 angeschlossen ist. Die Kupplung 218 ist als Nasskupplung ausgeführt. Eine Ausgangsseite 220 der Kupplung 218 ist verdrehfest mit einer Welle 222 der E-Maschine 204 verbunden.

Der Torsionsdämpfer 210, der in Fig. 4 in einem vereinfachten Schnitt gezeigt ist, ist als ein erstes Feder- und Dämpfungssystem 224 nach Art eines Zwei-Massen-Schwungrades aufgebaut, wobei eine erste Rotationsmasse 226 an der Eingangsseite 212 angeordnet ist.

Auch die zweite Ausführungsform weist eine Käfigeinrichtung 228 mit mehreren Käfigen 230 auf, wobei diese Käfige 230 der Aufnahme von Druckfedern 232 dienen. An ihrer einen Seite stützen sich die Duckfeder 232 an dem jeweiligen Käfig 230 ab. Im Unterschied zur ersten Ausführungsform stützen sich die Federn 232 jedoch mit ihrer anderen Seite an einem Zentralring 250, wobei dieser Zentralring 250 mit der ersten Rotationsmasse 226 in Wirkverbindung ist. Dementsprechend stützt sich im Unterschied zur ersten Ausführungsform bei der zweiten Ausführungsform die Käfigeinrichtung 228 ggf. über eine Nabe an einer Welle 238 ab, wobei die Welle 238 als Teil der Kupplung 218 ausgebildet sein kann.

Der Torsionsdämpfer 210 weist ferner eine Fliehkraftpendeleinrichtung 240 auf, welche auch als Fliehkraftpendel bezeichnet werden kann. Diese Fliehkraftpendeleinrichtung 240 weist Pendelmassen 242, 244 auf, die in Kurvenbahnen im Fliehkraftfeld pendeln. Daher steigt die Frequenz des Pendels mit der Drehzahl an und kann über den ganzen Drehzahlbereich der Drehungleichförmigkeit tilgen.

In Fig. 4 ist gezeigt, dass die Fliehkraftpendeleinrichtung 240 radial außerhalb der Käfigeinrichtung 228 mit den Druckfedern 232 in einer axial gleichen Lage angeordnet ist. Allerdings befinden sich sowohl die Fliehkraftpendeleinrichtung 240 als auch die Käfigeinrichtung 228 mit den Druckfedern 232 innerhalb der durch die erste Rotationsmasse 226 bestimmten Kontur.

Die Wirkungsweise des gezeigten Antriebsstrangs 200 ist folgende:
Ein von der Brennkraftmaschine 202 erzeugtes Drehmoment mit überlagertem Wechselmoment wird zunächst durch den an der ersten Rotationsmasse 226 (am Schwungrad) befestigten Zentralring 250 auf die Federn 232 des Torsionsdämpfers 210 übertragen und von den Federn 232 auf die mit der Welle 238 zur nassen Anfahrkupplung (NAK) befestigte Käfigeinrichtung 238 (Federführungsbleche) weitergeleitet. Diese Käfigeinrichtung 238 (Federführungsbleche) ist im Außendurchmesser so gestaltet, dass radial außerhalb des Federsatzes ausreichend Bauraum vorhanden ist, um die Fliehkraftpendeleinrichtung 240 (das Füehkraftpendel) daran zu befestigen. Da die Käfigeinrichtung 238 bei geschlossener Kupplung 218 (NAK) direkt mit der E-Maschine 204 verbunden ist, wirkt das Gegenmoment direkt auf die E-Maschine 204 und kann damit die durch die Resonanz der E-Maschine 204 hervorgerufenen Schwingungen deutlich reduzieren

Es sei noch erwähnt, dass zwischen der E-Maschine 204 und dem Getriebe 206 ein zweites Feder- und Dämpfungssystem 246 angeordnet ist.

### Bezugszeichenliste

- 100: Antriebsstrang
- 102: Brennkraftmaschine
- 104: E-Maschine
- 106: Schaltgetriebe
- 108: Abtriebswelle
- 110: Torsionsdämpfer (TD)
- 112: Eingangsseite (TD)
- 114: Ausgangsseite (TD)
- 116: Eingangsseite (Kupplung)
- 118: Kupplung
- 120: Ausgangsseite (Kupplung)
- 122: Welle (E-Maschine)
- 124: Feder- und Dämpfungssystem
- 126: erste Rotationsmasse
- 128: Käfigeinrichtung
- 130: Käfige
- 132: Druckfedern
- 134: Zentralscheibe
- 136: Nabe
- 138: Welle
- 140: Fliehkraftpendeleinrichtung
- 142: Pendelmasse
- 144: Pendelmasse
- 146: Zweites Feder- und Dämpfungssystem

- 200: Antriebsstrang
- 202: Brennkraftmaschine
- 204: E-Maschine
- 206: Schaltgetriebe
- 208: Abtriebswelle
- 210: Torsionsdämpfer (TD)
- 212: Eingangsseite (TD)
- 214: Ausgangsseite (TD)
- 216: Eingangsseite (Kupplung)
- 218: Kopplung
- 220: Ausgangsseite (Kupplung)
- 222: Welle (E-Maschine)
- 224: Feder- und Dämpfungssystem
- 226: erste Rotationsmasse
- 228: Käfigeinrichtung
- 230: Käfige
- 232: Druckfedern
- 238: Welle
- 240: Fliehkraftpendeleinrichtung
- 242: Pendelmasse
- 244: Pendelmasse
- 246: Zweites Feder- und Dämpfungssystem
- 250: Zentralring

## Patentansprüche

1. Hybridantriebsstrang mit einer Brennkraftmaschine (102; 202), einer E-Maschine (104; 204), einer Kupplung (118; 218) und einem Getriebe (106; 206),
wobei zwischen der Brennkraftmaschine (102; 202) und der E-Maschine (104; 204) ein erstes Feder- und Dämpfungssystem (124; 224) angeordnet ist,
wobei das Feder- und Dämpfungssystem (124; 224) eine Fliehkraftpendeleinrichtung (140; 240) aufweist,
wobei die E-Maschine (104; 204) getriebeseitig der Kupplung (118; 218) und die Kupplung (218) getriebeseitig der Fliehkraftpendeleinrichtung (240) angeordnet ist, wobei die Eingangsseite (216) der Kupplung (218) vorzugsweise verdrehfest mit einer Ausgangsseite der Fliehkraftpendeleinrichtung (240) gekoppelt ist, und wobei zwischen der E-Maschine (104; 204) und dem Getriebe (106; 206) ein zweites Feder- und Dämpfungssystem (146; 246) angeordnet ist,
wobei das erste Feder- und Dämpfungssystem (124; 224) nach Art eines Torsionsdämpfers (110; 210), insbesondere eines Zwei-Massen-Schwungrades, aufgebaut ist und auf einem ersten Radius Federn (132; 232) und auf einem zweiten Radius die Fliehkraftpendeleinrichtung (140; 240) aufweist, wobei der zweite Radius größer als der erste Radius ist.

2. Hybridantriebsstrang nach Anspruch 1,
**dadurch gekennzeichnet, dass**
die Federn (132) im Momentenfluss von der Brennkraftmaschine (102) zu dem Getriebe (106) brennkraftmaschinenseitig der Fliehkraftpendeleinrichtung (140) angeordnet sind.

3. Hybridantriebsstrang nach einem der Ansprüche 1 oder 2,
**dadurch gekennzeichnet, dass**
die Fliehkraftpendeleinrichtung (140; 240) an einer Rotationsmasse (126; 226) angeordnet ist.

4. Hybridantriebsstrang nach einem der Ansprüche 1 bis 3,
**dadurch gekennzeichnet, dass**
die Kupplung (118; 218) als Nasskupplung ausgebildet ist.

## Claims

1. Hybrid drive train, comprising an internal combustion engine (102; 202), an electric machine (104; 204), a clutch (118; 218) and a gearbox (106; 206),
wherein a first spring and damping system (124; 224) is located between the internal combustion engine (102; 202) and the electric machine (104; 204),
wherein the spring and damping system (124; 224) comprises a centrifugal pendulum device (140; 240),
wherein the electric machine (104; 204) is located on the gearbox side of the clutch (118; 218) and the clutch (218) is located on the gearbox side of the centrifugal pendulum device (240),
wherein the input side of the clutch (218) is preferably coupled nonrotatably to an input side of the centrifugal pendulum device (240), and wherein a second spring and damping system (146; 246) is located between the electric machine (104; 204) and the gearbox (106; 206), wherein the first spring and damping system (124; 224) is constructed in the manner of a torsion damper (110; 210), in particular of a damped flywheel, and comprises springs (132; 232) on a first radius and the centrifugal pendulum device (140; 240) on a second radius, the second radius being larger than the first radius.

2. Hybrid drive train according to claim 1,
**characterised in that**
the springs (132) are located in the momentum flow from the internal combustion engine (102) to the gearbox (106) on the internal combustion engine side of the centrifugal pendulum device (140).

3. Hybrid drive train according to claim 1 or 2,
**characterised in that**
the centrifugal pendulum device (140; 240) is located on a rotational mass (126; 226).

4. Hybrid drive train according to any of claims 1 to 3,
**characterised in that**
the clutch (118; 218) is designed as an oil-immersed clutch.

## Revendications

1. Chaîne cinématique comportant un moteur à combustion interne (102, 202), un moteur électrique (104, 204), un embrayage (118, 218) et une boîte de vitesses (106, 206),
entre le moteur à combustion interne (102, 202) et le moteur électrique (104, 204) est disposé un premier système de ressorts et d'amortissement (124, 224),
le système d'amortissement et de ressort (124, 224) présentant un dispositif de pendule à force centrifuge,
le moteur électrique (104; 204) est disposé côté boîte de vitesses de l'embrayage (118; 218) et l'embrayage (218) côté boîte de vitesse du dispositif de pendule à force centrifuge (240),
le côté d'entrée (216) de l'embrayage (218) étant couplé de manière solidaire en rotation à un côté de sortie du dispositif de pendule à force centrifuge (240), et entre le moteur électrique (104; 204) et la boîte de vitesses (106; 206) est disposé un second système de ressorts et d'amortissement (146, 246),
le premier système de ressorts et d'amortissement (124, 224) est conçu comme un amortisseur de torsion (110, 210), en particulier comme un double volant amortisseur et le dispositif de pendule à force centrifuge (140, 240) présente des ressorts (132, 232) sur le premier rayon et sur le second rayon, le second rayon étant supérieur au premier rayon.

2. Chaîne cinématique selon la revendication 1,
**caractérisé en ce que**
les ressorts (132) sont disposés dans le flux des moments à partir du moteur à combustion interne (102) vers la boîte de vitesses (106) côté moteur à combustion interne du dispositive de pendule à force centrifuge (140).

3. Chaîne cinématique selon revendication 1 ou 2,
**caractérisé en ce que**
le dispositif de pendule à force centrifuge (140, 240) est disposé sur une masse rotative (126, 226).

4. Chaîne cinématique selon l'une quelconque des revendications 1 à 3,
**caractérisé en ce que**
l'embrayage (118, 218) est formé comme un embrayage humide.
